# EUROPEAN PATENT SPECIFICATION

(11) **EP 4 334 251 B1**
(45) Date of publication and mention of the grant of the patent: **07.08.2024**
(21) Application number: 22725747.4
(22) Date of filing: 26.04.2022
(51) Int. Cl.: C01G 23/02, C01G 49/10, C01G 23/07, C01B 7/01

(54) **CHLORINE RECYCLE PROCESS FOR TITANIUM-BEARING FEEDSTOCKS WITH HIGH IRON CONTENTS FOR THE PRODUCTION OF TITANIUM TETRACHLORIDE BASED ON THE CONVERSION OF ANHYDROUS FERROUS CHLORIDE TO FERROUS SULFATE WITH CONCENTRATED SULFURIC ACID**
CHLORRÜCKFÜHRUNGSPROZESS FÜR TITANHALTIGE EINSATZSTOFFE MIT HOHEN EISENGEHALTEN ZUR HERSTELLUNG VON TITANTETRACHLORID AUF BASIS DER UMWANDLUNG VON WASSERFREIEM EISENCHLORID ZU EISENSULFAT MIT KONZENTRIERTER SCHWEFELSÄURE
PROCÉDÉ DE RECYCLAGE DE CHLORE POUR CHARGES CONTENANT DU TITANE À FORTES TENEURS EN DE FER POUR LA PRODUCTION DE TÉTRACHLORURE DE TITANE BASÉ SUR LA CONVERSION DE CHLORURE FERREUX ANHYDRE EN SULFATE FERREUX AVEC DE L'ACIDE SULFURIQUE CONCENTRÉ

(30) Priority: 06.05.2021 EP 21172411
(43) Date of publication of application: 13.03.2024
(73) Proprietor: KRONOS INTERNATIONAL, Inc., 51373 Leverkusen (DE)
(72) Inventor: MEDVED, Mitja, 51375 Leverkusen (DE); PIERAU, Thomas, 51371 Leverkusen (DE)
(74) Representative: Vollmers, Hans-Gerd
(86) International application number: PCT/EP2022/060989
(87) International publication number: WO 2022/233639

(56) References cited:
- EP-A1- 0 000 498
- CN-A- 1 552 628
- US-B1- 6 375 923
- BORDBAR HOSSEIN ET AL: "Production of titanium tetrachloride (TiCl 4 ) from titanium ores: A review", vol. 4, 1 January 2017 (2017-01-01), XP055853717, Retrieved from the Internet <URL:http://poj.ippi.ac.ir/article_1453_66efabf38f29b06843e51db04baba884.pdf> DOI: 10.22063/poj.2017.1453
- WENSHENG ZHANG ET AL: "A literature review of titanium metallurgical processes", HYDROMETALLURGY, ELSEVIER SCIENTIFIC PUBLISHING CY. AMSTERDAM, NL, vol. 108, no. 3, 10 April 2011 (2011-04-10), pages 177 - 188, XP028091436, ISSN: 0304-386X, [retrieved on 20110416], DOI: 10.1016/J.HYDROMET.2011.04.005
- KANG JUNGSHIN ET AL: "Production of High-Grade Titanium Dioxide Directly from Titanium Ore Using Titanium Scrap and Iron Chloride Waste", METALS AND MATERIALS, KOREAN INSITUTE OF METALS AND MATERIALS, KOREA, vol. 25, no. 1, 1 September 2018 (2018-09-01), pages 257 - 267, XP036665514, ISSN: 1598-9623, [retrieved on 20180901], DOI: 10.1007/S12540-018-0175-7

## Description

### Field of the invention

The invention relates to a method for recycling chlorine in the production of titanium tetrachloride. Further, the invention refers to the use of this method in the chloride process to produce titanium dioxide.

### Technological background of the invention

Titanium dioxide is either manufactured by the well-established sulfate process or the chloride process. The latter uses a titanium-containing feedstock which is reacted with chlorine gas and carbon to obtain titanium tetrachloride and other chlorides of metals and metalloids present in the feedstock. The thus obtained chlorides are subsequently separated by resublimation or distillation thereby exploiting their varying boiling points. The titanium tetrachloride is finally transformed to titanium dioxide, and the chlorine which is set free from the afore-mentioned reaction is separated, and reused in the reaction with the titanium-containing feedstock. Amongst other reasons, the reuse of chlorine makes the chloride process economically attractive.

In case the titanium-containing feedstock is comprised of a significant amount of components other than titanium, it is very burdensome to reuse the chlorine for the reaction with the titanium-containing feedstock. Because chlorides other than titanium tetrachloride are separated and removed from the process the chlorine from these components cannot be easily recovered and it therefore is lost for the internal recycling rendering the method economically less attractive.

In order to compensate chlorine loses, new chlorine must be added to the system which is associated with increased costs. The higher the content of components other than titanium the higher must be the compensation for the losses. Therefore, feedstocks with a high titanium dioxide content of at least 90 wt.% and a low content of further elements, which can be transformed into their chlorides, particularly iron, and result in byproducts of rather low commercial interest, are substantially preferred. These beneficial criteria are met by titanium containing slags and natural rutile. Disadvantageously, the production of titanium containing slags requires high energy input and natural rutile resources are becoming increasingly limited worldwide. The demand for natural rutiles is also increasing continuously due to the attractiveness of the chloride process. The increasing demand leads to higher prices for these rutiles. Further, titanium sources such as ilmenite are available in higher amounts, but possess a significant amount of iron, which would make the chloride process significantly more expensive for the reasons given above.

Therefore, there is a need in the art for a method for recycling chlorine in the production of titanium tetrachloride using a feedstock with a high iron content.

BORDBAR HOSSEIN et al "Production of titanium tetrachloride (TiCl4) from titanium ores: A review", POLYOLEFINS JOURNAL, vol. 4, 1 January 2017 (p. 155 left column) discloses a review of production methods of titanium tetrachloride from titanium ores. One possibility is the chlorination of ilmenite to selectively remove iron from the ilmenite. An oxidation process is applied to the formed iron chloride, and chlorine is regenerated for recirculation.

### Object and summary of the invention

It is the object of the invention to provide an improved method for recycling chlorine in the production of titanium tetrachloride wherein a titanium-bearing feedstock with a high iron content is used.

This object is achieved by the method described herein.

This invention provides a method for recycling chlorine in the production of titanium tetrachloride wherein a titanium-bearing feedstock with a high iron content is employed. The titanium tetrachloride can be further processed to titanium dioxide which is used as a white pigment in high quality paints, lacquers and the like. As a result, natural rutiles and expensive, manufactured slags are not the only eligible source as starting material for the chloride process. The method advantageously allows to recycle chlorine from ferrous chloride obtained when the titanium-bearing feedstock with high iron content such as ilmenite reacts with chlorine gas. The obtained ferrous chloride reacts with an aqueous solution of concentrated sulfuric acid, and gaseous hydrochloric acid and iron sulfate is obtained via a salt metathesis. The iron sulfate, in particular as monohydrate, is of high commercial interest. The obtained hydrochloric acid can be converted into chlorine and reused in the reaction with the titanium-bearing feedstock. This renders the method economically beneficial as no expensive titanium-bearing slags need to be used, and the chlorine used in the reaction can be recycled and is not lost.

Therefore, in a first aspect, the invention relates to a method for recycling chlorine in the production of titanium tetrachloride, the method is comprised of the following steps:
a) contacting chlorine with a titanium-bearing feedstock which comprises iron to obtain a chloride mixture comprising ferrous chloride and titanium tetrachloride,
b) separating the ferrous chloride from the chloride mixture,
c) contacting the ferrous chloride with an aqueous solution of concentrated sulfuric acid to obtain iron sulfate and gaseous hydrochloric acid,
d) converting at least a portion of the obtained gaseous hydrochloric acid into chlorine, and
e) using at least a portion of the chlorine obtained in step d) in step a).

In as second aspect, the invention is directed to the use of the method disclosed herein in the chloride process to obtain titanium dioxide.

Further advantageous embodiments of the invention are stated in the dependent claims.

### Description of the invention

These and other aspects, features and advantages of the invention become obvious to the skilled person from the study of the following detailed description and claims. Each feature from one aspect of the invention can be employed in any other aspect of the invention. Numerical ranges stated in the format "from x to y" include the mentioned values and the values that are within the respective measuring accuracy as known to the skilled person. If several preferred numerical ranges are stated in this format, it is a matter of course that all ranges formed by the combination of the various end points are also included.

In step a) of the method according to the present invention, the titanium-bearing feedstock which comprises iron is contacted with chlorine to obtain a chloride mixture comprising ferrous chloride and titanium tetrachloride. Preferably, the titanium-bearing feedstock comprises up to 70 wt.%, preferably up to 60 wt.%, and more preferably up to 50 wt.% iron based on the total weight of titanium-bearing feedstock. Further metals and metalloids can be present in the feedstock. In a preferred embodiment, said feedstock is selected from ilmenites, perovskites, rutiles, titanites or a mixture thereof. Techniques and apparatuses commonly used in the chloride process such as reactors for conducting a carbochlorination reaction in which a fluidized bed can be employed in this step.

From the chloride mixture obtained in step a) the ferrous chloride is separated in the subsequent step b). This can be accomplished by common techniques such as resublimation or distillation.

In step c), the ferrous chloride is contacted with an aqueous solution of concentrated sulfuric acid to obtain iron sulfate and gaseous hydrochloric acid. The ferrous chloride is obtained in step b). Preferably, step c) is conducted at a temperature of between 60 °C to 120 °C, more preferably of between 75 °C to 105 °C, and even more preferably between 90 °C and 100 °C. If necessary, prior to reaching the equilibrium state, the ferrous chloride and the aqueous solution of concentrated sulfuric acid are heated to a starting temperature above 100 °C for the initiation of the reaction, also known as salt metathesis.

An aqueous solution of concentrated sulfuric acid with a sulfuric acid concentration of 78.0 wt.% to 84.5 wt.% based on the total weight of the concentrated sulfuric acid mixture with water is preferably used.

In a preferred embodiment of step c), the amount of sulfuric acid used corresponds to at least the amount of sulfate ions necessary to replace chloride ions in the ferrous chloride by stoichiometric means. Any additional sulfuric acid added will remain unreacted in the product. The maximum concentration of the unreacted or free sulfuric acid in the product ferrous sulfate depends on the final product's application. In some applications the concentration of the free sulfuric acid can be as high as 10 wt.% referred to the total weight of the iron sulfate and sulfuric acid. However, usually the afore-mentioned concentration is between 2 wt.% and 5 wt.%.

The gaseous hydrochloric acid may comprise water in a concentration which does not exceed 12 wt.% and can range as low high as 0.01 wt.% of the total weight of the hydrochloric acid and water.

Preferably, essentially no water is present in step c). This means that an amount of water is present such that the obtained ferrous sulfate is obtained as monohydrate and not as other ferrous sulfate hydrates or as other ferrous chloride hydrates such as the undesired ferrous sulfate heptahydrate or ferrous chloride dihydrate. Thus, per mole ferrous sulfate obtained, at least one mole water is present. If necessary, more than one mole water is present per one mole ferrous sulfate to compensate vaporized water due to elevated temperatures.

Essentially no water is present after step b) and prior to step c). In a preferred embodiment of this invention, the iron sulfate is obtained as iron sulfate monohydrate and not as other ferrous sulfate hydrates or as other ferrous chloride hydrates such as the undesired ferrous sulfate heptahydrate or ferrous chloride dihydrate. To that end, water is added in the step c) to obtain iron sulfate monohydrate. Thus, per mole ferrous sulfate obtained, at least one mole water is present. If necessary, more than one mole water is present per one mole ferrous sulfate to compensate vaporized water due to elevated temperatures. The addition of water is preferably performed through the use of appropriate concentration of aqueous solution of sulfuric acid but any appropriate method or technique can be applied. Methods and techniques of water introduction to reach this goal which is the production of iron sulfate monohydrate are known to the skilled person.

Then, in step d), at least a portion of the obtained gaseous hydrochloric acid is converted into chlorine. The hydrochloric acid is obtained in step c). In a preferred embodiment of the invention, the conversion is conducted at an elevated temperature in presence of a catalyst. For example, common catalysts based either on copper chloride or on ferric chloride can be used. Other catalysts comprise ruthenium oxide, cerium oxide or chromium(III) oxide supported on tin oxide, silicon oxide, aluminum oxide or lanthanum oxide are also known. In another preferred embodiment, electrolysis is used in step d). Electrolysis with implemented Oxygen Depolarized Cathodes (ODC) is particularly suitable, when the water content in the gaseous hydrochloric acid exceeds 5 wt.% referred to the total weight of water and the gaseous hydrochloric acid. Both conversion techniques are well-established in the art.

In step e), at least a portion of the chlorine obtained in step d) in used in step a) and contacted with the titanium-bearing feedstock, and thus recycled.

In a further embodiment, at least a portion of the hydrochloric acid obtained in step c) is mixed with the ferrous chloride obtained in step b) to obtain an aqueous ferrous chloride suspension. The latter is economically attractive and used in wastewater treatment.

Preferably, the hydrochloric acid obtained in step c) is used for both, in the production of chlorine and in the production of an aqueous ferrous chloride suspension. Thus, at least a portion of the hydrochloric acid obtained in step c) in used in the conversion to chlorine in step d) and another portion of the hydrochloric acid obtained in step c) is mixed with the ferrous chloride obtained in step b) to obtain an aqueous ferrous chloride suspension.

The titanium tetrachloride is preferably reacted with oxygen in step f) to obtain titanium dioxide. The titanium tetrachloride was manufactured in step a). If needed, the titanium tetrachloride is purified prior to said reaction with oxygen.

The method steps described herein are conducted in the following order: a), b), c), d), e) and then f).

In a further aspect of the invention, the method disclosed herein is used in the chloride process to obtain titanium dioxide.

## Claims

1. A method for recycling chlorine in the production of titanium tetrachloride, the method is comprised of the following steps:
a) contacting chlorine with a titanium-bearing feedstock which comprises iron to obtain a chloride mixture comprising ferrous chloride and titanium tetrachloride,
b) separating the ferrous chloride from the chloride mixture,
c) contacting the ferrous chloride with an aqueous solution of concentrated sulfuric acid to obtain iron sulfate and gaseous hydrochloric acid,
d) converting at least a portion of the obtained gaseous hydrochloric acid into chlorine, and
e) using at least a portion of the chlorine obtained in step d) in step a).

2. The method according to claim 1, **characterized in that**
step c) is conducted at a temperature of between 60 °C to 120 °C, preferably of between 75 °C to 105 °C, and more preferably between 90 °C and 100 °C.

3. The method according to claim 1 or 2, **characterized in that**
water is added in step c) to obtain iron sulfate monohydrate.

4. The method according to any one of claims 1 to 3, **characterized in that** the aqueous solution of concentrated sulfuric acid used in step c) with a sulfuric acid concentration of 78.0 wt.% to 84.5 wt.% based on the total weight of the aqueous solution is used.

5. The method according to any one of claims 1 to 4, **characterized in that** the titanium-bearing feedstock comprises up to 70 wt.%, preferably up to 60 wt.%, and more preferably up to 50 wt.% iron based on the total weight of titanium-bearing feedstock.

6. The method according to any one of claims 1 to 5, **characterized in that** at least a portion of the gaseous hydrochloric acid obtained in step c) is mixed with the ferrous chloride obtained in step b) to obtain an aqueous ferrous chloride suspension.

7. The method according to any one of claims 1 to 6, **characterized in that** the titanium-bearing feedstock is selected from the group consisting of ilmenites, perovskites, rutiles, titanites or a mixture thereof.

8. The method according to any one of claims 1 to 7 **characterized in that** step d) is conducted at an elevated temperature in the presence of a catalyst.

9. The method according to any one of claims 1 to 7, **characterized in that** electrolysis is used in step d).

10. The method according to any one of claims 1 to 9, **characterized in that** the method comprises the following step:
f) reacting the titanium tetrachloride with oxygen to obtain titanium dioxide.

11. Use of the method according to any one of the claims 1 to 10 in the chloride process to obtain titanium dioxide.

## Patentansprüche

1. Ein Verfahren zur Wiederverwendung von Chlor bei der Herstellung von Titantetrachlorid, wobei das Verfahren die folgenden Schritte umfasst:
a) Inkontaktbringen von Chlor mit einem titanhaltigen, eisenhaltigen Ausgangsmaterial, um ein Chloridgemisch zu erhalten, das Eisenchlorid und Titantetrachlorid enthält,
b) Abtrennung des Eisenchlorids aus dem Chloridgemisch,
c) Inkontaktbringen des Eisenchlorids mit einer wässrigen Lösung von konzentrierter Schwefelsäure, um Eisensulfat und gasförmige Salzsäure zu erhalten,
d) Umwandlung mindestens eines Teils der erhaltenen gasförmigen Salzsäure in Chlor und
e) Verwendung mindestens eines Teils des in Schritt d) gewonnenen Chlors in Schritt a).

2. Ein Verfahren nach Anspruch 1, **dadurch gekennzeichnet, dass** Schritt c) bei einer Temperatur zwischen 60°C und 120°C, vorzugsweise zwischen 75°C und 105°C und noch bevorzugter zwischen 90°C und 100°C durchgeführt wird.

3. Ein Verfahren nach Anspruch 1 oder 2, **dadurch gekennzeichnet, dass** in Schritt c) Wasser zugegeben wird, um Eisensulfatmonohydrat zu erhalten.

4. Ein Verfahren nach einem der Ansprüche 1 bis 3, **dadurch gekennzeichnet, dass** die in Schritt c) verwendete wässrige Lösung konzentrierter Schwefelsäure mit einer Schwefelsäurekonzentration von 78,0 Gew.-% bis 84,5 Gew.-%, bezogen auf das Gesamtgewicht der wässrigen Lösung, eingesetzt wird.

5. Ein Verfahren nach einem der Ansprüche 1 bis 4, **dadurch gekennzeichnet, dass** das titanhaltige Ausgangsmaterial bis zu 70 Gew.-%, vorzugsweise bis zu 60 Gew.-% und besonders bevorzugt bis zu 50 Gew.-% Eisen, bezogen auf das Gesamtgewicht des titanhaltigen Ausgangsmaterials, enthält.

6. Ein Verfahren nach einem der Ansprüche 1 bis 5, **dadurch gekennzeichnet, dass** mindestens ein Teil der in Schritt c) erhaltenen gasförmigen Salzsäure mit dem in Schritt b) erhaltenen Eisen(II)-chlorid gemischt wird, um eine wässrige Eisen(II)-chlorid-Suspension zu erhalten.

7. Ein Verfahren nach einem der Ansprüche 1 bis 6, **dadurch gekennzeichnet, dass** das titanhaltige Ausgangsmaterial aus der Gruppe bestehend aus Ilmeniten, Perowskiten, Rutilen, Titaniten oder einer Mischung davon ausgewählt ist.

8. Ein Verfahren nach einem der Ansprüche 1 bis 7, **dadurch gekennzeichnet, dass** Schritt d) bei einer erhöhten Temperatur in Gegenwart eines Katalysators durchgeführt wird.

9. Ein Verfahren nach einem der Ansprüche 1 bis 7, **dadurch gekennzeichnet, dass** in Schritt d) eine Elektrolyse durchgeführt wird.

10. Ein Verfahren nach einem der Ansprüche 1 bis 9, **dadurch gekennzeichnet, dass** das Verfahren den folgenden Schritt umfasst:
f) Reaktion des Titantetrachlorids mit Sauerstoff, um Titandioxid zu erhalten.

11. Die Verwendung des Verfahrens nach einem der Ansprüche 1 bis 10 im Chloridverfahren zur Gewinnung von Titandioxid.

## Revendications

1. Un procédé de réutilisation du chlore dans la production de tétrachlorure de titane, ledit procédé comprenant les étapes suivantes :
a) mise en contact du chlore avec une matière première ferreuse contenant du titane, pour obtenir un mélange de chlorures contenant du chlorure de fer et du tétrachlorure de titane
b) séparation du chlorure ferrique du mélange de chlorures,
c) mise en contact du chlorure ferrique avec une solution aqueuse d'acide sulfurique concentré pour obtenir du sulfate ferreux et de l'acide chlorhydrique gazeux,
d) conversion d'au moins une partie de l'acide chlorhydrique gazeux obtenu en chlore ; et
e) utilisation d'au moins une partie du chlore récupéré dans l'étape d) dans l'étape a).

2. Un procédé selon la revendication 1, **caractérisé en ce que** l'étape c) est réalisée à une température comprise entre 60°C et 120°C, de préférence entre 75°C et 105°C, et plus préférentiellement encore entre 90°C et 100°C.

3. Un procédé selon la revendication 1 ou 2, **caractérisé en ce que**, dans l'étape c), de l'eau est ajoutée pour obtenir du sulfate de fer monohydraté.

4. Un procédé selon l'une des revendications 1 à 3, **caractérisé en ce que** la solution aqueuse d'acide sulfurique concentré utilisée à l'étape c) a une concentration en acide sulfurique de 78,0 % à 84,5 % en poids par rapport au poids total de la solution aqueuse.

5. Un procédé selon l'une des revendications 1 à 4, **caractérisé en ce que** le matériau de départ contenant du titane contient jusqu'à 70 % en poids, de préférence jusqu'à 60 % en poids et de manière particulièrement préférée jusqu'à 50 % en poids de fer, par rapport au poids total du matériau de départ contenant du titane.

6. Un procédé selon l'une des revendications 1 à 5, **caractérisé en ce qu'**au moins une partie de l'acide chlorhydrique gazeux obtenu à l'étape c) est mélangée avec le chlorure ferreux obtenu à l'étape b) pour obtenir une suspension aqueuse de chlorure ferreux.

7. Procédé selon l'une quelconque des revendications 1 à 6, **caractérisé en ce que** la matière première contenant du titane est choisie dans le groupe constitué par les ilménites, les pérovskites, les rutiles, les titanites ou un mélange de ceux-ci.

8. Un procédé selon l'une quelconque des revendications 1 à 7, **caractérisé en ce que** l'étape d) est réalisée à une température élevée en présence d'un catalyseur.

9. Un procédé selon l'une quelconque des revendications 1 à 7, **caractérisé en ce qu'**une électrolyse est réalisée à l'étape d).

10. Procédé selon l'une quelconque des revendications 1 à 9, **caractérisé en ce que** le procédé comprend l'étape suivante :
f) réaction du tétrachlorure de titane avec l'oxygène pour obtenir du dioxyde de titane.

11. L'utilisation du procédé selon l'une quelconque des revendications 1 à 10 dans le procédé au chlorure pour l'obtention de dioxyde de titane.
